# EUROPÄISCHE PATENTSCHRIFT

(11) **EP 1 446 556 B1**
(45) Veröffentlichungstag und Bekanntmachung des Hinweises auf die Patenterteilung: **29.03.2006**
(21) Anmeldenummer: 02765289.0
(22) Anmeldetag: 17.10.2002
(51) Int. Cl.: F01D 25/12, F01D 25/26

(54) **TURBOMASCHINE**
TURBINE UNIT
TURBOMACHINE

(30) Priorität: 30.10.2001 CH 19902001
(43) Veröffentlichungstag der Anmeldung: 18.08.2004
(73) Patentinhaber: Alstom Technology Ltd, 5400 Baden (CH)
(72) Erfinder: DITTMANN, Rolf, CH-5415 Nussbaumen (CH); HURTER, Jonas, CH-5400 Baden (CH); MARMILIC, Robert, CH-5415 Nussbaumen (CH); MEYLAN, Pierre, CH-2532 Magglingen/Macolin (CH); PAULI, Ernst, CH-8044 Zürich (CH)
(86) Internationale Anmeldenummer: PCT/IB2002/004289
(87) Internationale Veröffentlichungsnummer: WO 2003/038242

(56) Entgegenhaltungen:
- EP-A- 0 014 941
- CH-A- 245 486
- DE-A- 4 324 125
- DE-C- 367 109
- DE-C- 507 129

## Beschreibung

### Technisches Gebiet

Die vorliegende Erfindung betrifft eine Turbomaschine gemäss dem Oberbegriff des Anspruchs 1.

### Stand der Technik

Das Phänomen des sogenannten "Buckelns" des Läufers wie des Gehäuses von Turbomaschinen wie Gasturbinen und Dampfturbinen ist hinreichend bekannt. Es wird dadurch hervorgerufen, dass die grossen und massereichen Strukturen solcher Maschinen nach längerem Betrieb grosse Wärmemengen gespeichert haben. Beim Abkühlen stellt sich in den vergleichsweise grossen Strömungskanälen eine ausgeprägte vertikale Temperaturschichtung ein, welche zu ungleichmässigen Temperaturverteilungen in den statischen wie den rotierenden Bauteilen führt, was aufgrund der unterschiedlichen thermischen Dehnungen in einem Verzug von Gehäuse und Rotor und Abweichungen von der rotationssymmetrischen Sollgeometrie resultiert. Bei den unvermeidlich geringen Spaltmassen in modernen Turbomaschinen kommt es dadurch zum Blockieren des Rotors im Gehäuse, was zu Lasten der Startverfügbarkeit geht, und daneben die mechanische Integrität zu gefährden vermag. Bekannt sind daher beispielsweise aus der US 3,793,905 oder der US 4,854,120 Systeme zum Wellendrehen oder auch zum sogenannten Wellenschalten. Dabei wird der Rotor einer Turbomaschine nach dem Abstellen mit einer gewissen Drehzahl weitergedreht. Dabei sind, wie beim bekannten Wellenschalten, geringe Drehzahlen im Bereich von 1/min oder weniger bevorzugt. Dies genügt einerseits, um die Kühlung des Rotors in Umfangsrichtung zu vergleichmässigen; andererseits ist die Drehzahl niedrig genug, um keine ausgeprägte Axialdurchströmung etwa des Heissgaspfades einer Gasturbine, mit damit verbundenem Kaltlufteintrag und Thermoschocks, zu provozieren.

Moderne Gasturbinen werden im hochtemperaturbelasteten Teil häufig mit zweischaligen Gehäusen ausgeführt. Dabei ist zwischen einem inneren Gehäuse und einem äusseren Gehäuse ein Ringraum ausgebildet, der im Betrieb häufig mit Kühlluft oder anderem Kühlmittel beaufschlagt wird. In dem Ringraum bildet sich ist nach dem Abstellen der Gasturbine ohne weitere Massnahmen ebenfalls eine vertikale Temperaturschichtung aus, die zu einem Verzug der Gehäuse führt.

DE 507 129 und WO 00/11324 schlagen vor, bei einem zweischaligen Gehäuse einer Turbomaschine Mittel vorzusehen, um im Stillstand der Turbomaschine durch eine erzwungene Strömung innerhalb des Zwischenraums die stabile Temperaturschichtung zu stören. Dabei wird im wesentlichen vorgeschlagen ausserhalb des Ringraumes Medium von einer Stelle des Ringraumes zu einer anderen Stelle des Ringraumes zu fördem, wodurch eine Ausgleichsströmung innerhalb des Ringraumes induziert wird. Das dort vorgeschlagene System ist jedoch ein aktives System, das zu seiner Funktion auf die Funktion eines Gebläses angewiesen ist. Ein System, welches das Buckeln des Gehäuses und damit ein Anstreifen der Schaufeln einer Turbomaschine vermeiden soll, muss allerdings als Sicherheitssystem betrachtet werden, welches möglichst passiv arbeiten sollte, ohne auf die Funktion aktiver Komponenten angewiesen zu sein.

DE 367 109 offenbart ein passives System zur Kühlluftdurchströmung von Komponenten einer Verbrennungsmaschine. Dies ist aber für eine Konvektionsoptimierung ausgelegt, und zur Erfüllung der vorliegenden Aufgabe schon deshalb nicht geeignet, weil auf eine Konvektionsoptimierung Wert gelegt wird, was im vorliegenden Fall unerwünschte Themoschocks nach sich zieht. EP 0 014 941 gibt ein System zur passiven Ventilation in einem zwischen zwei Gehäuseschalen gebildeten Zwischenraum an. Zur Vermeidung von Thermoschocks soll vorliegend jedoch keine ausgeprägte Durchströmung der Gehäusekavität hergestellt werden, sondern es soll lediglich die Ausbildung ausgeprägter vertikaler Temperaturschichtungen vermieden werden. Weiterhin haben die in DE 367 109 und EP 0 014 941 vorgestellten Systeme keine Möglichkeit, störende Einflüsse auf die bei den betrachteten Turbomaschinengehäusekavitäten im Betrieb vorliegenden erforderlichen, aufwändig optimierten Strömungen auszuschalten.

### Darstellung der Erfindung

Aufgabe der Erfindung ist es, eine Turbomaschine der eingangs erwähnten Art anzugeben, welche die Nachteile des Standes der Technik vermeidet. Insbesondere soll eine Turbomaschine angegeben werden, bei der eine Vorrichtung zur Vermeidung der Ausbildung stabiler Temperaturschichtungen in Statorkavitäten und zur Vermeidung des Buckeln des Gehäuses inhärent sicher, ohne aktive Komponenten, ausgeführt ist.

Erfindungsgemäss wird dies durch die Gesamtheit der Merkmale des Anspruchs 1 erreicht.

Kem der Erfindung ist es also, Mittel vorzusehen, um das jeweils wärmste Fluid aus der Kavität abzuführen, und auf diese Weise die Ausbildung markanter Temperaturschichtungen zu unterbinden. Das abströmende Fluid muss dabei selbstverständlich durch ein zuströmendes Fluid ersetzt werden. Die Mittel zur Abfuhr des wärmsten Fluides sind an einer geodätisch am höchsten gelegenen Stelle der Kavität angeordnet, so, dass sich gewissermassen ein Kaminzugeffekt einstellt, der die Aufrecherhaltung der Strömung ohne aktive Komponenten ermöglicht. Das System ist daher inhärent sicher. Gleichzeitig wird Fluid der maximalen Temperatur abgeführt, wodurch die gesamte vorliegende Temperaturdifferenz schon an sich vermindert wird. Die Mittel zur Abfuhr von Fluid und die Mittel zur Zufuhr der Ausgleichsströmung bilden zusammen mit der Kavität einen Strömungsweg. Es ist für die Erfindung bedeutsam, dass ein Absperrorgan vorgesehen ist, welches es ermöglicht, den Strömungspfad abzusperren. So ist es möglich, die vollständig passiv realisierte Gehäuseventilation während des Betriebes der Turbomaschine, während dem sie sogar sehr schädlich sein kann, abzusperren, und den Strömungsweg unmittelbar nach dem Abstellen, also der Beendigung des Betriebes, wieder freizugeben.

Es ist dabei keineswegs Ziel der Erfindung, eine Gehäuseventilation mit Kühlmittel an sich zu realisieren, sondern es soll nur das sich an der geodätisch am höchsten gelegenen Stelle ansammelnde jeweils wärmste Fluid aus der Gehäusekavität abgeführt werden, wobei zwangsläufig eine entsprechende Ausgleichströmung zu realisieren ist. Mit dieser einfachen Massnahme können stark ausgeprägte Temperaturschichtungen vermieden werden, ohne gleichzeitig durch Kaltlufteintrag, wie er nach dem Stand der Technik vorliegt, eine der Warmstartsicherheit abträgliche, schnelle Gehäuseabkühlung zu provozieren. Die Ventilation der Kavität kann demgemäss auch intermittierend vorgenommen werden, dies insbesondere dann, wenn eine Vorrichtung zur Messung der Temperaturschichtung zur Verfügung steht. Das Absperrorgan kann dann in der Art einer Zweipunktregelung geöffnet und geschlossen werden, derart, dass, wenn ein Grenzwert der gemessenen Temperaturschichtung -im einfachsten Falle als Temperaturdifferenz zwischen zwei Stellen unterschiedlicher geodätischer Höhe - überschritten wird, das Absperrorgan geöffnet und so die rein passiv konvektionsgetriebene Ventilation aktiviert wird, und, wenn ein unterer Grenzwert unterschritten wird, das Absperrorgan wieder geschlossen wird.

Mit Vorteil ist das Absperrorgan ein Absperr- und Drosselorgan, welches nicht nur ein vollständiges Freigeben oder Absperren des Strömungsweges ermöglicht, sondern auch eine variable Drosselung des Strömungsweges und damit der Ventilationsströmung erlaubt. Dies ermöglicht es, den Strömungsweg einerseits während der Betriebes der Maschine zu schliessen, andererseits kann die Intensität der Ventilation beispielsweise in Abhängigkeit von einer innerhalb der Kavität gemessenen Temperaturverteilung eingestellt werden. Wenn innerhalb der Kavität an wenigstens zwei Messstellen, welche an unterschiedlichen geodätischen Höhenpositionen angeordnet sind, eine grosse Temperaturdifferenz gemessen wird, bedeutet dies eine ausgeprägte Temperaturschichtung, und das Drosselorgan wird entsprechend geöffnet, um die Ventilation zu intensivieren. Wenn umgekehrt eine kleine Temperaturschichtung gemessen wird, welche unterhalb eines fallweise festzulegenden Grenzwertes liegt, wird das Drosselorgan weiter geschlossen, und die Durchströmung der Kavität vermindert. Auf diese Weise werden einerseits unzulässige Temperaturschichtungen innerhalb des Gehäuses, verbunden mit Gehäuseverkrümmungen, vermieden, und andererseits wird eine zu schnelle Abkühlung vermieden, was der Warmstartsicherheit zuträglich ist.

Es ist von Vorteil, wenn das zum Ausgleich des abströmenden Fluides zuströmende Fluid vorgängig der Einbringung in die Kavität vorgewärmt wird. Dies resultiert darin, dass die gesamte Gehäuseabkühlung langsamer vonstatten geht, was einerseits die Belastung des Gehäuses verringert, andererseits die Sicherheit und Zuverlässigkeit von Warmstarts verbessert. Daher werden bevorzugt stromauf der Stelle der Einbringung dieses Ausgleichsfluides in die Kavität Mittel zur Vorwärmung des Ausgleichsfluides vorgesehen. Diese können beispielsweise darin bestehen, dass das Fluid andere heisse Bauteile wie den Rotor oder einen Brennraum einer Gasturbine über- oder durchströmt, und dabei Wärme aufnimmt. In einer Vielzahl möglicher Strömungsführungen ist diese Bedingung ohnehin erfüllt oder mit nur geringen Modifikationen zu erfüllen.

Die Erfindung erweist sich insbesondere dann als besonders geeignet, wenn die Kavität beispielsweise zwischen einer Brennraumwand und einem Aussenzylinder einer Gasturbine gebildet ist, wobei die Kavität häufig einen ringförmigen oder ringsegmentförmigen Querschnitt aufweist. Wenn die Erfindung in einer Gasturbine realisiert wird, erweist es sich weiterhin als günstig, die Mittel zur Abfuhr von Fluid mit dem Abgastrakt und die Mittel zur Zufuhr von Fluid mit dem Kühlsystem zu verbinden.

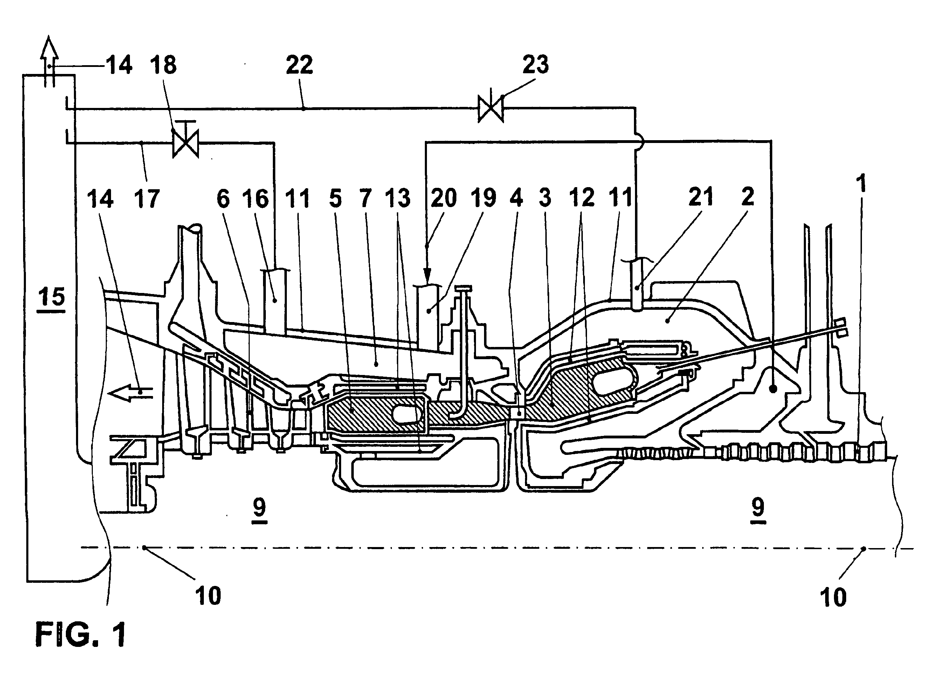

### Kurze Beschreibung der Zeichnung

Die Erfindung soll nachfolgend anhand der Zeichnung näher erläutert werden. Die einzige Figur zeigt einen Teil des thermischen Blockes einer Gasturbine, bei der die Erfindung realisiert ist.

### Weg zur Ausführung der Erfindung

Die Erfindung soll im Kontext einer Turbomaschine erläutert werden. In der Zeichnung ist der thermische Block einer Gasturbine dargestellt, wobei nur der oberhalb der Maschinenachse 10 befindliche Teil gezeigt ist. Bei der in der Zeichnung dargestellten Maschine handelt es sich um eine Gasturbine mit sogenannter sequentieller Verbrennung, wie sie beispielsweise aus der EP 620362 bekannt ist. Obschon deren Funktionsweise für die Erfindung ohne primäre Bedeutung ist, sei diese der Vollständigkeit halber in groben Zügen erläutert. Ein Verdichter 1 saugt einen Luftmassenstrom an und verdichtet diesen auf einen Arbeitsdruck. Die verdichtete Luft strömt durch ein Plenum 2 in eine erste Brennkammer 3 ein. Dort wird eine Brennstoffmenge eingebracht und in der Luft verbrannt. Das entstehende Heissgas wird in einer ersten Turbine 4 teilentspannt, und strömt in eine zweite Brennkammer, eine sogenannte SEV-Brennkammer, ein. Dort zugeführter Brennstoff entzündet sich aufgrund der noch hohen Temperatur des teilentspannten Heissgases. Das nacherhitzte Heissgas wird in einer zweiten Turbine 6 weiter entspannt, wobei eine mechanische Leistung auf die Welle 9 übertragen wird. Das entspannte Heissgas 14 strömt durch einen Abgastrakt ab, der durch einen Kamin 15 angedeutet ist. Selbstverständlich kann dieses Abgas vor dem Abströmen durch einen Kamin auch Mittel zur Nutzung der Abgaswärme durchströmen, beispielsweise einen Abhitzedampferzeuger.

Im Betrieb herrschen bereits in den letzten Verdichterstufen, erst recht aber im Bereich der Brennkammern 3, 5 und in den Turbinen 4, 6 Temperaturen von mehreren 100 °C. Nach dem Abstellen einer solchen Maschine speichern die grossen Massen - beispielsweise eine Masse des Rotors 9 von 80 Tonnen - eine grosse Wärmemenge über eine längere Zeit. In fluidgefüllten Hohlräumen der Maschine stellt sich während des Abkühlens im Stillstand eine ausgeprägte vertikale Temperaturschichtung ein. Diese führt dazu, dass sich die Unter- und Oberteile von Gehäuse und Rotor ungleich schnell abkühlen, wodurch es zu einem Verzug der Komponenten kommt, was als "Buckeln" bezeichnet wird.

Mit Blick auf den Bereich der zweiten Brennkammer 5 der dargestellten Gasturbine ist zwischen einer Brennraumwand 13 und dem Aussenmantel 11 der Gasturbine eine ringtorusförmige Kavität 7 ausgebildet. Im Betrieb der Gasturbine wird diese von vom Verdichter geförderten und abgezweigten Kühlluft zwangsdurchströmt. Während der Abkühlphase erfolgt ein Wärmeeintrag in die Kavität über die Brennraumwand 13, und die Wärmeabfuhr über den Aussenmantel 11. In der Kavität stellt sich parallel dazu eine freie Konvektionströmung ein, in deren Folge sich ohne weitere Massnahmen warmes Fluid im oberen Teil der Kavität ansammelt, während sich kälteres Fluid im unteren Teil der Kavität befindet. Die dargestellte Gasturbine weist aus diesem Grunde an einer geodätisch am höchsten gelegenen Stelle der Kavität erste Mittel 16 zur Abfuhr von Fluid aus der Kavität auf, sowie zweite Mittel 19 zur Zufuhr eines Fluides 20 als Ausgleichströmung für das durch die ersten Mittel 16 abgeführte warme Fluid. Die zweiten Mittel 19 sind ebenfalls an einer oberen Position der Kavität angeordnet, aber axial deutlich von den ersten Mitteln zur Abfuhr von Fluid beabstandet. Diese Anordnung hat den Vorteil, dass ein vergleichweise kühles Ausgleichmedium 20 aufgrund des Dichteunterschiedes zunächst in den unteren Teil der Kavität strömt, um dort erwärmt zu werden und wieder aufzusteigen. Aus den axial beabstandeten Positionen der Mittel zur Zu- und Abfuhr von Fluid resultiert weiterhin auch eine Axialdurchströmung der Kavität, dergestalt, dass die Kavität möglichst vollständig ventiliert wird, wodurch schliesslich die Ausbildung einer ausgeprägten Temperaturschichtung unterbunden wird. Ausgehend von den ersten Mitteln 16 zur Abfuhr des warmen Fluides ist eine schematisch dargestellte Leitung 17 angeordnet, welche im Kamin 15 oder an einer anderen geeigneten Stelle des Abgastraktes der Gasturbine mündet. Der Kaminzugeffekt im Abgastrakt unterstützt die Abfuhr des warmen Fluides aus der Kavität wirkungsvoll. In der Leitung 17 ist ein Absperr- und Drosselorgan 18 angeordnet. Dieses ist während des Betriebes der Gasturbine geschlossen, im Stillstand geöffnet. Dabei kann durch eine definierte Drosselung die Ventilationsintensität innerhalb der Kavität beeinflusst werden. Insbesondere ist es von Vorteil, wenn die Ventilationsintensität beschränkt wird auf einen Wert, bei dem zwar einerseits die Ausbildung ausgeprägter Temperaturschichtungen vermieden wird, andererseits aber eine schnelle Gehäuseabkühlung vermieden wird. Gegebenenfalls können auch in der Fluidzuführung zu den zweiten Mitteln 19 entsprechende Absperr- und Drosselorgane vorgesehen sein. Im vorliegenden Beispiel wird das Kühlluftsystem, durch welches im Betrieb Kühlluft in die Kavität 7 einströmt, zur Zufuhr der Ausgleichströmung verwendet. Aus Sicherheitsgründen sind im Kühlsystem keine Absperrorgane vorgesehen. Das als Ausgleichströmung vorgesehene Fluid 20 entspricht im Betrieb der Mitteldruckkühlluft, und wird aus dem Verdichter 1 entnommen. Das Fluid hat in diesem Falle mehrere Verdichterstufen durchströmt, und Wärme aus den Strukturen des Verdichters aufgenommen; es ist daher gerechtfertigt, davon zu sprechen, dass Mittel zur Vorwärmung des Fluides im Strömungsweg angeordnet sind, obschon kein spezieller Wärmetauscher vorgesehen ist. Bei einer entsprechenden Führung des Fluides zu den Mitteln 19 kann der Strömungsweg des Ausgleichsfluides selbstverständlich über spezielle Wärmetauscher geführt werden. Im Bereich der ersten Brennkammer ist zwischen der Brennkammerhaube 12 und dem Gasturbinenmantel 11 das Plenum 2 gebildet, welches ebenso eine ringförmige Kavität darstellt, in der sich eine schädliche Temperaturschichtung einzustellen vermag. Im Betrieb der Gasturbine wird das Plenum 2 von der Verbrennungsluft durchströmt. Auch hier sind an einer geodätisch oberen Stelle Mittel 21 angeordnet, durch welche erwärmtes Medium abzuströmen vermag. Diese Mittel sind mit einer ebenfalls in den Abgastrakt 15 geführten Leitung 22 verbunden, und stehen auf die oben beschriebene Weise mit einem Absperr- und Drosselorgan 23 in Wirkverbindung. Als Mittel zur Zufuhr eines Ausgleichsfluides fungiert in diesem Fall unmittelbar der Austritt des Verdichters 1. Das zuströmende Fluid hat vorgängig der Zuströmung zur Kavität 2 den gesamten Verdichter 1 durchströmt und Wärme aus den heissen Strukturen der Verdichterendstufen, welche nach längerem Vollastbetrieb beispielsweise Temperaturen von 400°C und mehr aufweisen, aufgenommen. Somit fungieren diese hier als Mittel zur Vorwärmung des zugeführten Fluides.

Die Anordnung der zweiten Mittel zur Zufuhr des Ausgleichsfluides ist erfindungsgemäss nicht festgeschrieben, und muss durch den Fachmann fallweise zweckmässig gewählt werden.

Die Erfindung ist keineswegs darauf beschränkt, in den am weitesten aussen liegenden Kavitäten 2, 7 verwendet zu werden. Bei geeigneter Ausführung der Mittel, kann die Erfindung ebenso in den Brennkammem 3, 5 oder und dem zwischen den Gehäuseelementen 12, 13 und der Welle 9 gebildeten Raum realisiert werden.

Die Erfindung ist ebenfalls nicht auf die Anwendung in ringförmigen Kavitäten beschränkt.

Der Fachmann erkennt ohne Weiteres, dass die Anwendung der Erfindung keineswegs auf Gasturbinen beschränkt ist, sondern dass die Erfindung in einer Vielzahl weiterer Anwendungsfälle eingesetzt werden kann. Selbstverständlich ist die Anwendung der Erfindung auch nicht auf eine in der Zeichnung dargestellte Gasturbine mit sequentieller Verbrennung beschränkt, sondern sie kann auch bei Gasturbinen mit nur einer oder mehr als zwei Brennkammern Anwendung finden. Insbesondere kann die Erfindung, wie sie in den Ansprüchen gekennzeichnet ist, auch in Dampfturbinen realisiert werden.

### Bezugszeichenliste

- 1: Verdichter
- 2: Kavität, Plenum
- 3: Brennkammer
- 4: erste Turbine
- 5: Brennkammer
- 6: zweite Turbine
- 7: Kavität
- 9: Welle
- 10: Maschinenachse
- 11: Aussengehäuse, Aussenmantel, äussere Wand
- 12: inneres Gehäuse, innere Wand, Brennraumwand
- 13: inneres Gehäuse, innere Wand, Brennraumwand
- 14: Abgas, entspanntes Heissgas
- 15: Abgastrakt, Kamin
- 16: Mittel zur Abfuhr von Fluid
- 17: Leitung
- 18: Absperr- und/oder Drosselorgan
- 19: Mittel zur Zufuhr von Fluid
- 20: zugeführtes Fluid, Ausgleichsfluid
- 21: Mittel zur Abfuhr von Fluid
- 22: Leitung
- 23: Absperr- und/oder Drosselorgan

## Patentansprüche

1. Turbomaschine, mit wenigstens einer zwischen einem inneren (12, 13) und einem äusseren Gehäuse (11) der Turbomaschine gebildeten Kavität (2, 7),welche Kavität an einer geodätisch höchstgelegenen Stelle erste Mittel (16, 21) zur Abfuhr von Fluid und zweite Mittel (19) zur Zufuhr von Fluid aufweist, dergestalt, dass die Kavität zusammen mit den ersten und den zweiten Mitteln einen Strömungsweg bildet, **dadurch gekennzeichnet, dass** in dem Strömungsweg wenigstens ein Absperrorgan (18,23) angeordnet ist, welches eine vollständige Absperrung des Strömungswegs ermöglicht.

2. Turbomaschine nach Anspruch 1, **dadurch gekennzeichnet, dass** das Absperrorgan (18, 23) in den Mitteln zur Abfuhr von Fluid (16, 21) angeordnet ist.

3. Turbomaschine nach einem der Ansprüche 1 oder 2, **dadurch gekennzeichnet, dass** das Absperrorgan (18, 23) ein Absperr- und Drosselorgan ist, welches eine Absperrung oder eine variable Drosselung des Strömungswegs ermöglicht.

4. Turbomaschine nach einem der vorstehenden Ansprüche, **dadurch gekennzeichnet, dass** die Turbomaschine Mittel zur Vorwärmung des zugeführten Fluides aufweist, welche stromauf der Stelle der Einbringung in die Kavität angeordnet sind.

5. Turbomaschine nach einem der vorstehenden Ansprüche, **dadurch gekennzeichnet, dass** die Kavität (2, 7) mit einem im Wesentlichen ringförmigen oder ringsegmentförmigen Querschnitt ausgebildet ist.

6. Turbomaschine nach einem der vorstehenden Ansprüche, **dadurch gekennzeichnet, dass** die Turbomaschine eine Gasturbine ist.

7. Turbomaschine nach Anspruch 6, **dadurch gekennzeichnet, dass** das innere Gehäuse eine Brennkammerhaube (12) oder eine Brennraumwand (13) der Gasturbine ist, und, dass das äussere Gehäuse ein Aussenmantel (11) der Gasturbine ist.

8. Turbomaschine nach einem der Ansprüche 6 oder 7, **dadurch gekennzeichnet, dass** die ersten Mittel (16, 21) zur Abfuhr von Fluid über eine Leitung (17, 22) mit dem Abgastrakt (15) der Gasturbine in Verbindung stehen.

9. Turbomaschine nach einem der Ansprüche 6 bis 8, **dadurch gekennzeichnet, dass** die zweiten Mittel (19) zur Zufuhr von Fluid mit dem Kühlsystem der Gasturbine verbunden sind.

10. Verfahren zum Betrieb einer Turbomaschine nach einem der vorstehenden Ansprüche, **dadurch gekennzeichnet, dass** das Absperrorgan während des Betriebes der Turbomaschine geschlossen gehalten wird, und, dass das Absperrorgan im Stillstand der Turbomaschine, insbesondere in einer dem Betrieb folgenden Abkühlphase, geöffnet wird.

11. Verfahren nach Anspruch 10, **dadurch gekennzeichnet, dass** das Absperrorgan im Stillstand der Turbomaschine abwechselnd geöffnet und geschlossen wird.

12. Verfahren nach Anspruch 11, **dadurch gekennzeichnet, dass** das Absperrorgan in Abhängigkeit von einer in der Kavität gemessenen Temperaturschichtung geöffnet und geschlossen wird.

13. Verfahren nach einem der Ansprüche 10 bis 12, **dadurch gekennzeichnet, dass** der Strömungsweg in Abhängigkeit von einer innerhalb der Kavität gemessenen Temperaturverteilung variabel gedrosselt wird.

## Claims

1. Turbomachine having at least one cavity (2, 7) formed between an inner casing (12, 13) and an outer casing (11) of the turbomachine, which cavity, at a point situated at the highest geodetic level, has first means (16, 21) for discharging fluid and second means (19) for feeding fluid, in such a way that the cavity together with the first and the second means forms a flow path, **characterized in that** at least one shutoff member (18, 23) which enables the flow path to be completely shut off is arranged in the flow path.

2. Turbomachine according to Claim 1, **characterized in that** the shutoff member (18, 23) is arranged in the means (16, 21) for discharging fluid.

3. Turbomachine according to either of Claims 1 and 2, **characterized in that** the shutoff member (18, 23) is a shutoff and throttle member which enables the flow path to be shut off or throttled in a variable manner.

4. Turbomachine according to one of the preceding claims, **characterized in that** the turbomachine has means for preheating the fed fluid which are arranged upstream of the point at which the fluid is introduced into the cavity.

5. Turbomachine according to one of the preceding claims, **characterized in that** the cavity (2, 7) is formed with an essentially annular or ring-segment-shaped cross section.

6. Turbomachine according to one of the preceding claims, **characterized in that** the turbomachine is a gas turbine.

7. Turbomachine according to Claim 6, **characterized in that** the inner casing is a combustor dome (12) or a combustor wall (13) of the gas turbine, and **in that** the outer casing is an outer shell (11) of the gas turbine.

8. Turbomachine according to either of Claims 6 and 7, **characterized in that** the first means (16, 21) for discharging fluid are connected via a line (17, 22) to the exhaust-gas duct (15) of the gas turbine.

9. Turbomachine according to one of Claims 6 to 8, **characterized in that** the second means (19) for feeding fluid are connected to the cooling system of the gas turbine.

10. Method of operating a turbomachine according to one of the preceding claims, **characterized in that** the shutoff member is kept closed during the operation of the turbomachine, and **in that** the shutoff member is opened when the turbomachine is at rest, in particular during a cooling phase following the operation.

11. Method according to Claim 10, **characterized in that** the shutoff member is opened and closed alternately when the turbomachine is at rest.

12. Method according to Claim 11, **characterized in that** the shutoff member is opened and closed as a function of a thermal stratification measured in the cavity.

13. Method according to one of Claims 10 to 12, **characterized in that** the flow path is throttled in a variable manner as a function of a temperature distribution measured inside the cavity.

## Revendications

1. Turbomachine, comprenant au moins une cavité (2, 7) formée entre un boîtier interne (12, 13) et un boîtier externe (11) de la turbomachine, laquelle cavité présente, à un endroit situé le plus en hauteur du point de vue géodésique, des premiers moyens (16, 21) d'évacuation de fluide et des deuxièmes moyens (19) d'apport de fluide, de telle sorte que la cavité forme conjointement avec les premiers et deuxièmes moyens un chemin d'écoulement, **caractérisée en ce que** dans le chemin d'écoulement est disposé au moins un organe d'arrêt (18, 23) qui permet un blocage complet du chemin d'écoulement.

2. Turbomachine selon la revendication 1, **caractérisée en ce que** l'organe d'arrêt (18, 23) est disposé dans les moyens d'évacuation de fluide (16, 21).

3. Turbomachine selon l'une quelconque des revendications 1 ou 2, **caractérisée en ce que** l'organe d'arrêt (18, 23) est un organe d'arrêt et un organe d'étranglement, qui permet un blocage ou un étranglement variable du chemin d'écoulement.

4. Turbomachine selon l'une quelconque des revendications précédentes, **caractérisée en ce que** la turbomachine présente des moyens pour réchauffer le fluide acheminé, lesquels sont disposés en amont du point d'introduction dans la cavité.

5. Turbomachine selon l'une quelconque des revendications précédentes, **caractérisée en ce que** la cavité (2, 7) est réalisée avec une section transversale essentiellement annulaire ou en forme de segment annulaire.

6. Turbomachine selon l'une quelconque des revendications précédentes, **caractérisée en ce que** la turbomachine est une turbine à gaz.

7. Turbomachine selon la revendication 6, **caractérisée en ce que** le boîtier interne est un capot de chambre de combustion (12) ou une paroi d'un espace de combustion (13) de la turbine à gaz et **en ce que** le boîtier externe est une enveloppe extérieure (11) de la turbine à gaz.

8. Turbomachine selon l'une quelconque des revendications 6 ou 7, **caractérisée en ce que** les premiers moyens (16, 21) d'évacuation de fluide sont en liaison avec le conduit de gaz d'échappement (15) de la turbine à gaz par le biais d'une conduite (17, 22).

9. Turbomachine selon l'une quelconque des revendications 6 à 8, **caractérisée en ce que** les deuxièmes moyens (19) d'apport de fluide sont connectés au système de refroidissement de la turbine à gaz.

10. Procédé pour faire fonctionner une turbomachine selon l'une quelconque des revendications précédentes, **caractérisé en ce que** l'organe d'arrêt est maintenu fermé pendant le fonctionnement de la turbomachine et **en ce que** l'organe d'arrêt est ouvert pendant l'arrêt de la turbomachine, notamment dans une phase de refroidissement suivant le fonctionnement.

11. Procédé selon la revendication 10, **caractérisé en ce que** l'organe d'arrêt est ouvert et fermé en alternance lors de l'arrêt de la turbomachine.

12. Procédé selon la revendication 11, **caractérisé en ce que** l'organe d'arrêt est ouvert et fermé en fonction d'une strate de température mesurée dans la cavité.

13. Procédé selon l'une quelconque des revendications 10 à 12, **caractérisé en ce que** le chemin d'écoulement est étranglé de manière variable en fonction d'une répartition de température mesurée à l'intérieur de la cavité.
